# EUROPÄISCHE PATENTSCHRIFT

(11) **EP 0 509 191 B1**
(45) Veröffentlichungstag und Bekanntmachung des Hinweises auf die Patenterteilung: **21.05.1997**
(21) Anmeldenummer: 92101091.4
(22) Anmeldetag: 23.01.1992
(51) Int. Cl.: B60G 17/04

(54) **Fühlereinrichtung für Federungszylinder einer Niveauregulierung**
Sensor device for a spring cylinder of a level control
Arrangement de détecteur pour cylindre de suspension d'un contrôle d'assiette

(30) Priorität: 17.04.1991 DE 4112549
(43) Veröffentlichungstag der Anmeldung: 21.10.1992
(73) Patentinhaber: WEBER-HYDRAULIK GmbH, D-74361 Güglingen (DE)
(72) Erfinder: Obermeyer, Günter, W-7129 Güglingen (DE)
(74) Vertreter: Säger, Manfred, Dipl.-Ing.

(56) Entgegenhaltungen:
- EP-A- 0 323 020
- DE-A- 2 734 417
- DE-A- 3 512 232
- FR-A- 2 398 225

## Beschreibung

Die Erfindung betrifft eine Fühlereinrichtung gemäß dem Oberbegriff des Hauptanspruches für Federungszylinder einer Niveauregulierung, mit der es möglich ist, die Lage eines Fahrzeugs über den Abstand eines ersten und eines zweiten Anlenkauges zu regulieren.

Es sind bereits verschiedene Fühlereinrichtungen bekannt (DE-27 34 417 A1; DE-35 12 232 C2), die bei der Regulierung der Lage eines Fahrzeugs eingesetzt werden.

Dabei besteht die bekannte gattungsgemäße Fühlereinrichtung (DE-27 34 417 A1) aus zwei magnetisch ansprechenden Zungenschaltern, die als Fühler ausgebildet sind und in Längserstreckung des Federungszylinders voneinander beabstandet auf einem Schutzrohr angeordnet sind. Zur Erweiterung eines Nachweisbereiches weist die gattungsgemäße Fühlereinrichtung Metallstreifen auf, die die Wirkung eines in einem Endbereich eines äußeren Rohres eines Federungszylinders befindlichen Dauermagneten auf einen breiten Nachweisbereich erweitern. Die magnetisch ansprechenden Zungenschalter sind mit einem relativ großen Abstand in Längserstreckung des Federungszylinders voneinander auf dem Schutzrohr aus nichtmagnetischem Material fest angeordnet. Das Schutzrohr seinerseits ist starr mit dem Federungszylinder verbunden. Ein Signal für die Zu- oder Abfuhr von Druckmittel in bzw. aus einer Kammer wird durch Annäherung des Dauermagneten an die mit den magnetisch angesprechenden Zungenschaltern verbundenen Metallstreifen erzeugt, wobei durch ein solches Signal entweder eine Druckmittelpumpe oder eine Druckmittelauslaßventil betätigt wird.

Nachteilig bei der gattungsgemäßen Fühlereinrichtung ist, daß verschiedene Federungszylinder für verschiedene Fahrzeugtypen hergestellt und bereitgehalten werden müssen, da die Fühlereinrichtung über das Schutzrohr starr mit dem Federungszylinder verbunden ist, und daß eine Anpassung der Fühlereinrichtung an den Federungszylinder je nach Fahrzeugtyp und in Abhängigkeit von Fertigungstoleranzen nicht möglich ist.

Eine weitere bekannte Fühlereinrichtung (DE-35 12 232 C2) weist berührungslose Elektroschalter als Fühlereinrichtung auf, welche auf dem Schutzrohr des Federungszylinders angeordnet sind. Die berührungslosen Elektroschalter bewirken auf Annäherung des Endbereichs des äußeren Rohres des Federungszylinders Signale, die die Druckmittelzu- oder -abfuhr hervorrufen. Die berührungslosen Elektroschalter sind starr mit dem Schutzrohr verbunden, wobei der geringe Abstand in Federungszylinderlängserstreckung der berührungslosen Elektroschalter ein Versetzen dieser in Umfangsrichtung erforderlich macht.

Zusätzlich zu den Nachteilen, die schon bei einer gattungsgemäßen Fühlereinrichtung auftreten, kommt hinzu, daß der Bauraum durch die Anordnung der berührungslosen Elektroschalter an zwei verschiedenen Umfangspositionen des Federungszylinders für diesen sehr groß sein muß. Außerdem ist nachteilig, daß zur Übertragung der Signale der berührungslosen Elektroschalter zwei Anschlußkabel vorgesehen werden müssen.

Der Erfindung liegt daher die Aufgabe zugrunde, eine Fühlereinrichtung derart weiterzubilden, daß die oben genannten Nachteile des Standes der Technik vermieden werden und daß insbesondere ein Einstellen der Fühlereinrichtung in Abhängigkeit von verschiedenen Fahrzeughöhen, Fahrzeug- und Fertigungstoleranzen, bei gleichen Bauelementen, möglich wird.

Die der Erfindung zugrundeliegende Aufgabe wird bei einer Fühlereinrichtung gemäß dem Oberbegriff des Hauptanspruches erfindungsgemäß durch dessen kennzeichnende Merkmale gelöst.

Die erfindungsgemäße Fühlereinrichtung weist zumindest einen ersten und einen davon in Federungszylinderlängserstreckung beabstandeten zweiten Fühler auf. Dabei sind der erste und der zweite Fühler in einem gemeinsamen Gehäuse angeordnet, das lösbar und in Federungszylinderlängserstreckung verschieblich auf dem Schutzrohr befestigt ist. Das Schutzrohr ist um die Federungszylinderlängs- achse drehbar an dem Federungszylinder festgelegt.

Wird beispielsweise bei der Einstellung der Fahrzeuglage von dem Endbereich des äußeren Rohres des Federungszylinders das erste, dem ersten Anlenkauge näherliegende Fühler überfahren, so bewirkt das von dem Fühler abgegebene Signal eine Druckmittelzufuhr in die Kammer des Federungszylinders, um den Abstand des ersten von dem zweiten Anlenkauge zu vergrößern. Wird infolge von Belastungsänderungen des Fahrzeugs der zweite, dem zweiten Anlenkauge zugewandte Fühler von dem Endbereich des äußeren Rohres des Federungszylinders überfahren, so bewirkt das von diesem Fühler ausgehende Signal die Öffnung eines Ablaßventils, so daß Druckmittel aus der Kammer abgeführt wird, um den Abstand der Anlenkaugen zu verringern.

Die eingesetzten Fühler, die beispielsweise als berührungslose Näherungsschalter auf Magnet- oder Induktionswirkung beruhend ausgeführt sein können, erfordern funktionsbedingt einen gewissen Raum, so daß ein Einstellen eines Schaltabstandes in Federungszylinderlängserstreckung ein Versetzen dieser Fühler in Umfangsrichtung erforderlich macht. Die Fühler sind deswegen in dem gemeinsamen Gehäuse sowohl in Umfangsrichtung als auch in Federungszylinderlängserstreckung voneinander beabstandet angeordnet. Um eine sichere Funktion der Fühler zu gewährleisten, kann entweder, in an sich bekannter Weise, das Schutzrohr mit Öffnungen versehen sein, oder aber bevorzugt das gemeinsame Gehäuse und die Fühler mit an die Außenwand des Schutzrohres angepaßten Radien versehen sein.

Die Ausgestaltung des Schutzrohres mit einem Ansatz und des gemeinsamen Gehäuses mit einer Nut ermöglicht ein Einstellen der Fühlerposition in Abhängigkeit von Fahrzeugtyp und Fertigungstoleranzen. Die zum Festhalten des gemeinsamen Gehäuses vorgesehene Klemmvorrichtung dient dabei zum Festhalten des gemeinsamen Gehäuses an dem Ansatz. Eine weitere Einstellmöglichkeit der Fühlerposition ergibt sich durch die drehbare Ausgestaltung des Schutzrohres an dem Federungszylinder.

Zweckmäßige Ausgestaltungen und Weiterbildungen der Erfindung sind in den Unteransprüchen gekennzeichnet.

Wenn an dem einen, dem ersten Anlenkauge zugewandten Ende des Schutzrohres eine kegelförmige Aufweitung an dem Schutzrohr vorgesehen ist, ist mit Halbringen und einer Spannschelle eine Befestigung des Schutzrohres an dem Federungszylinder erlaubt. Durch die kegelförmige Aufweitung, die Halbringe und die Spannschelle wird im Zusammenwirken mit entsprechenden Führungsflächen an dem Federungszylinder erreicht, daß eine in Federungszylinderlängserstreckung formschlüssige Verbindung zustandekommt. Diese formschlüssige Verbindung ist erforderlich, damit mit Hilfe der auf dem Schutzrohr und dem gemeinsamen Gehäuse vorgesehenen Markierungen eine Positionierung der Fühler erfolgen kann.

Der Schaltabstand der Fühler kann aufgrund der Anordnung der Fühler in einem gemeinsamen Gehäuse schon vor der Festlegung des gemeinsamen Gehäuses an dem Schutzrohr festgelegt werden. Da der Schaltabstand der Fühler zum Teil im Millimeterbereich liegt, ist hier die vorherige Festlegung des Schaltabstands durch die Positionierung der Fühler in dem gemeinsamen Gehäuse wichtig. Das gemeinsame Gehäuse ermöglich außerdem die Reduzierung des zur Montage des Federungszylinders erforderlichen Bauraums sowie die Anordnung nur eines gemeinsamen Anschlußkabels.

Es sei nochmals darauf hingewiesen, daß bei der bevorzugten erfindungsgemäßen Ausgestaltung der Fühlereinrichtung das Schutzrohr keine Durchbrüche aufweist, so daß auch bei einem unbeabsichtigten Abreißen des gemeinsamen Gehäuses von dem Schutzrohr kein Schmutz durch die Durchbrüche eintreten kann, um die Lauffläche der Kolbenstange zu beschädigen.

Da die Einstellung der Fühlerposition auch nach dem Zusammenbau des Federungszylinders und gegebenenfalls sogar nach dessen Montage erfolgen kann, ist es nicht mehr erforderlich unterschiedliche Schutzrohre und damit unterschiedliche Baureihen für Federungszylinder herzu- stellen und zu bevorraten.

Durch die erfindungsgemäße Ausgestaltung der Fühlereinrichtung wird daher ein einheitliches Schutzrohr zur Verfügung gestellt und somit auch eine rationellere Fertigung, Lagerung und Ersatzteilversorgung gewährleistet, da die Federungszylinder dadurch in größeren Stückzahlen gehandhabt werden können.

Vorteilhafte Ausgestaltungen und Weiterbildungen der Erfindung ergeben sich aus den Unteransprüchen im Zusammenhang mit der Zeichnung Darin zeigt:
- Figur 1: eine erfindungsgemäße Fühlereinrichtung für einen Federungszylinder in vereinfachter Darstellung in einem Schnitt;
- Figur 2: einen dem ersten Anlenkauge zugewandten Teil eines Federungszylinders mit der erfindungsgemäßen Fühlereinrichtung an einem Schutzrohr in einer abgebrochenen Darstellung;
- Figur 3: einen Federungszylinder gemäß Fig. 2 in einer Ansicht von oben sowie mit Aufbrüchen;
- Figur 4: den Federungszylinder gemäß Fig. 2 um 90° gedreht in einer geschnittenen abgebrochenen Darstellung;
- Figur 5: eine bevorzugte Ausführungsform des Schutzrohres mit einem Ansatz in einem Schnitt senkrecht zur Federungszylinderlängserstreckung;
- Figur 6: das Schutzrohr gemäß Fig. 5 in einer Seitenansicht;
- Figur 7: das gemeinsame Gehäuse der Fühler in einer Seitenansicht;
- Figur 8: das gemeinsame Gehäuse der Fühler gemäß Fig. 7 in einer Vorderansicht; und
- Figur 9: das gemeinsame Gehäuse der Fühler gemäß Fig. 7 in einer Draufsicht.

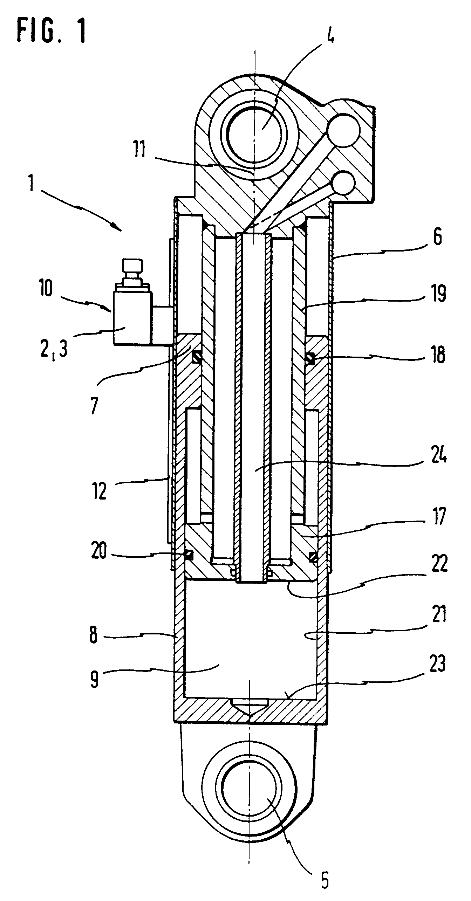

Die in Fig. 1 gezeigte Fühlereinrichtung 1 für einen Federungszylinder einer Niveauregulierung weist ein erstes und ein zweites Anlenkauge 4, 5 auf. Dazwischen erstrecken sich ein äußeres Rohr 8 sowie ein inneres Rohr 17, wobei das äußere Rohr 8 das innere Rohr 17 umgreift und mittels ersten Dichtungen 18 gegenüber einer ersten auf dem inneren Rohr 17 gebildeten Lauffläche 19 abgedichtet ist. Eine zusätzliche Abdichtung erfolgt mittels zweiten Dichtungen 20, die eine Kammer 9 dadurch abdichten, daß sie auf einer zweiten auf der Innenwand des äußeren Rohres 8 gebildeten Lauffläche 21 aufliegen. Mit dem Abstand des ersten und des zweiten Anlenkauges ist das Volumen in der Kammer 9 veränderlich, wobei die Kammer 9 durch die zweite Lauffläche 21, eine das innere Rohr 17 schließende erste Stirnfläche 22 und eine einen Boden des äußeren Rohres 8 bildende zweite Stirnfläche begrenzt ist. In die Kammer 9 mündet ein Kanal 24, in den seinerseits der Druckmittelzufuhr- und Druckmittelabfuhrkanal münden. Bei einer Volumenänderung der Kammer 9 verschieben sich das äußere und das innere Rohr 8, 17 gegeneinander, so daß auch Endbereiche 7 des äußeren Rohres 8 gegenüber dem ersten Anlenkauge verschoben werden. Dabei überfahren diese Endbereiche auch die Bereiche, in denen Fühler 2, 3 auf einem Schutzrohr 6 angeordnet sind. Das Schutzrohr 6 ist im wesentlichen konzentrisch zu dem inneren und dem äußeren Rohr 17, 8 angeordnet und im Bereich des dem ersten Anlenkauge zugewandten Ende des Federungszylinders an diesem drehbar befestigt. Das Schutzrohr ist bei Verwendung von auf Induktion oder Magnetkräften ansprechenden Fühlern 2, 3 aus einem Kunststoff hergestellt, der die Wirkung der zu den Meßsignalen führenden Kräfte nur unwesentlich beeinträchtigt.

Die Fühler 2, 3 sind in dem gemeinsamen Gehäuse 10 derart angeordnet, daß ein Messen auch kleiner Schaltabstände möglich ist. Aus diesem Grund sind die Fühler in Federungszylinderlängserstreckung und in Umfangsrichtung versetzt angeordnet. Das gemeinsame Gehäuse 10 umgreift mit einer Nut einen auf dem Schutzrohr 6 gebildeten Ansatz 12. Dadurch ist ein Verschieben des gemeinsamen Gehäuses 10 und ein Einstellen der Fühlerposition in Federungszylinderlängserstreckung möglich. Die Einstellung der Fühlerposition am Umfang erfolgt durch ein Verdrehen des Schutzrohres 6 relativ zu dem Federungszylinder.

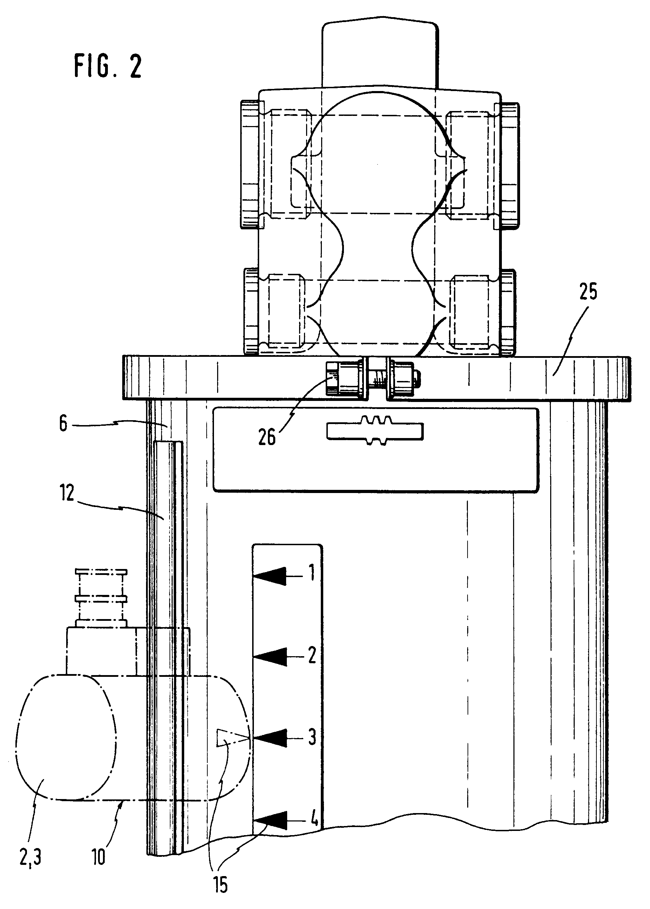

Der in der Fig. 2 gezeigte abgebrochene obere Teil des Federungszylinders zeigt das Schutzrohr, den darauf befindlichen Ansatz 12, der als Führungsleiste ausgebildet ist sowie das die Fühler 2 und 3 umschließende gemeinsame Gehäuse 10, das auf dem Schutzrohr 6 angeordnet ist. Die abgebildeten Markierungen 15 dienen der Einstellung der Fühlerposition in Federungszylinderlängserstreckung. Mittels einer zumindest eine Spannschraube 26 aufweisenden Spannschelle 25 sowie mit in dieser Figur nicht gezeigten Kleinteilen wird das Schutzrohr 6 an dem Federungszylinder befestigt. Ist die Schelle 25 gelöst, so läßt sich die Fühlerposition in Umfangsrichtung durch Drehen des Schutzrohres einstellen.

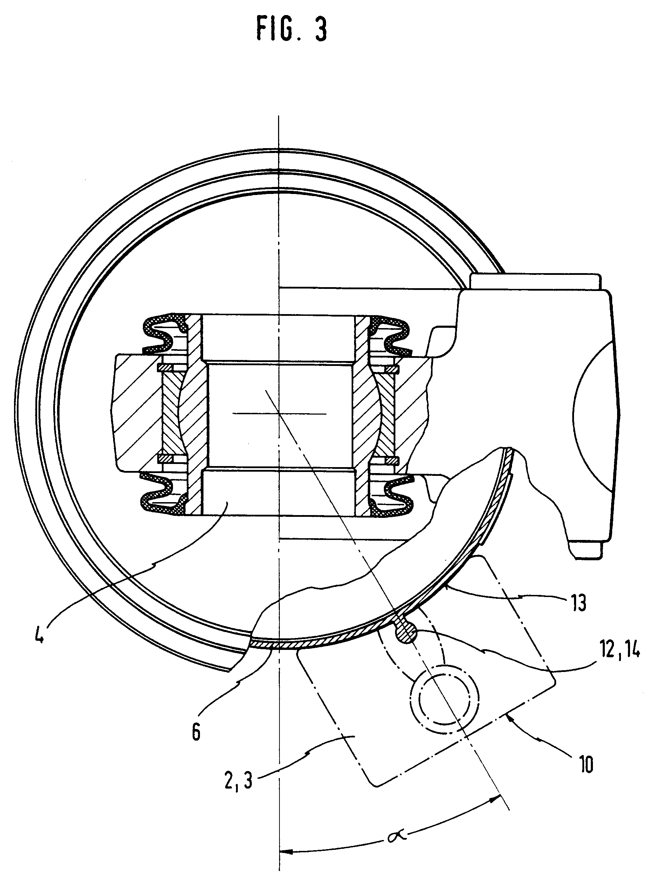

Fig. 3 zeigt den Federungszylinder gemäß Fig. 2 in einer Ansicht von oben mit teilweisen Aufbrüchen. Das erste Anlenkauge 4 ist im Schnitt dargestellt. Lagerung und Dichtung sind in üblicher Weise ausgeführt. Der Aufbruch läßt erkennen, wie das gemeinsame Gehäuse 10 auf dem Ansatz 12 angeordnet ist. Die Nut 14 umgreift dabei den Ansatz so, daß eine nicht gezeigte Klemmvorrichtung die Halterung bewirken kann. Die Stirnseite 13 des Gehäuses ist dem Radius der Außenwand des Schutzrohres 6 angepaßt. Durch das schon bei Fig. 2 beschriebene Lösen der Spannschelle und das Verdrehen des Schutzrohres kann der Winkel Alpha, mit dem die Fühlerposition in Umfangsrichtung bestimmt werden kann, eingestellt werden.

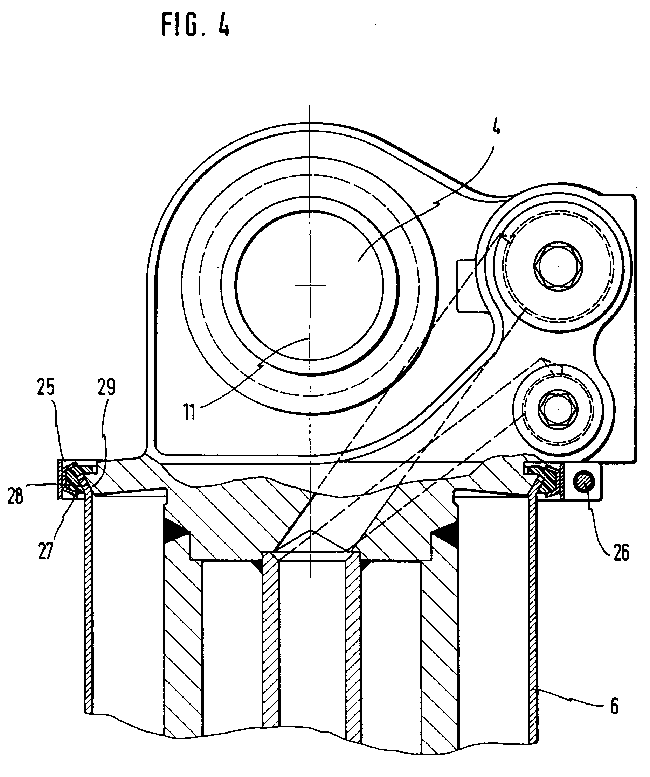

Fig. 4 zeigt den einen abgebrochenen Bereich des Federungszylinders in einem Schnitt. Dabei läßt sich die Anordnung der Spannschelle 25 und der Spannschraube 26 erkennen, wobei diese einen Hilfsring, der als Haltering ausgeführt sein kann, umgreifen, um das Schutzrohr 6 an dem Federungszylinder zu lagern. Das Schutzrohr 6 weist an seinem ersten kegelförmig aufgeweiteten Bereich erste Führungsflächen 28 auf, die mit an dem Federungszylinder vorgesehenen zweiten Führungsflächen 29 zusammenwirken. Dadurch wird eine in Zylinderlängserstreckung formschlüssige Verbindung von Federungszylinder und Schutzrohr 6 erreicht.

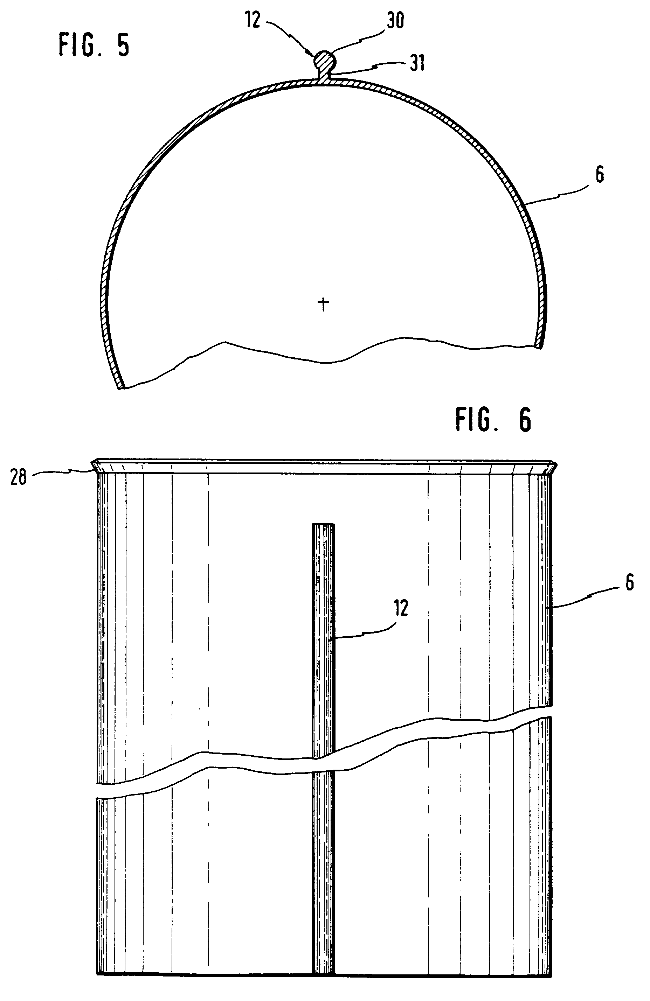

Das Schutzrohr 6 ist in den Fig. 5 und 6 im Detail dargestellt. In der geschnittenen Ansicht gemäß Fig. 5 ist der Ansatz 12 als Führungsleiste ausgebildet, derart, daß ein im wesentlichen zylindrisches Profil 30 mittels eines Steges 31 mit dem Schutzrohr 6 verbunden ist. Dabei ist das zylindrische Profil 30 eine bevorzugte Ausführungsform, es sind aber auch andere auf die Nut 14 abgestimmte Profilformen denkbar. Bei einer Ausführung des Schutzrohres aus Kunststoff ist insbesondere daran gedacht, den Ansatz 12 schon bei der Herstellung des Rohres vorzusehen, so daß das Schutzrohr 6 und der Ansatz 12 eine Einheit bilden.

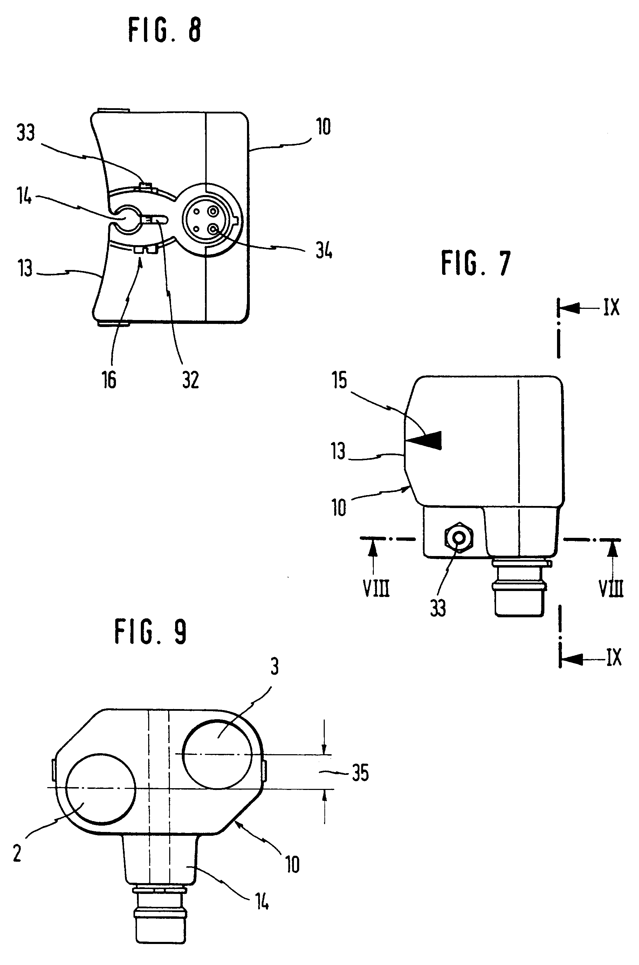

Fig. 7 zeigt das die Fühler 2 und 3 aufnehmende gemeinsame Gehäuse 10. Die Markierungen 15 befinden sich auf beiden Seiten des gemeinsamen Gehäuses und sind so angeordnet, daß die Pfeilspitzen der Markierungen 15 ganz dicht an die Außenwand des Schutzrohres heranreichen kann.

Das gemeinsame Gehäuse 10 gemäß Fig .7 ist in Fig. 8 in einer Vorderansicht dargestellt. Die in der Stirnseite 13 des gemeinsamen Gehäuses 10 angeordnete Nut 14 ist im wesentlichen zylinderförmig ausgebildet, um den Ansatz 12 zu umgreifen. Die Klemmvorrichtung 16 ist so ausgelegt, daß durch das Anziehen der Schraube mit Mutter 33 der Querschnitt der Nut 14 verringert wird. Dazu ist angrenzend an die Nut 14 ein Schlitz vorgesehen. Fig. 8 zeigt darüber hinaus einen Anschluß 34 für ein Anschlußkabel.

Figur 9 zeigt das gemeinsame Gehäuse 10 gemäß Fig. 7 in einer Draufsicht. Die Fühler 2 und 3 sind in Umfangsrichtung versetzt angeordnet und weisen zudem einen Schaltabstand 35 auf. Dieser Schaltabstand ist durch die Anordnung der Fühler 2 und 3 in dem gemeinsamen Gehäuse 10 vorgegeben, kann aber in einer weiteren Ausführungsform der Erfindung beliebig verändert werden.

## Patentansprüche

1. Fühlereinrichtung (1) für einen Federungszylinder mit einem Schutzrohr (6) und mit zumindest zwei, nämlich einem ersten und einem zu diesem in Langserstreckung des Schutzrohres (6) mit Abstand angeordneten zweiten Fühler (2 bzw. 3), die in einem gemeinsamen Gehäuse (10) angeordnet sind, wobei das gemeinsame Gehäuse (10) an seiner Stirnseite (13) einen der Außenwand des Schutzrohres (6) angepaßten Radius aufweist, wobei der Federungszylinder ein erstes und ein zweites Anlenkauge (4, 5) und ein mit einem derselben (4) verbundenes, bezüglich des Schutzrohres (6) relativ unbewegliches inneres Rohr (17) sowie ein zwischen diesen und dem Schutzrohr (6) geführtes, mit dem anderen Anlenkauge (5) versehenes äußeres Rohr (8) sowie eine bei Beaufschlagung mit Druckmittel mit der relativen Verschiebung des äußeren und des inneren Rohres (17) größenveränderliche Kammer aufweist, und wobei die beiden Fühler (2, 3) bei Nachweis eines Endbereichs (7) des äußeren Rohres (8) Signale für die Zu- oder Abfuhr von Druckmittel in bzw. aus der Kammer (9) bewirken,
**dadurch gekennzeichnet**,
daß bei der Fühlereinrichtung (2, 3, 6, 10) das gemeinsame Gehäuse (10) lösbar und in Längserstreckung des Schutzrohres (6) verschieblich an diesem festlegbar ist,
daß das Schutzrohr (6) in willkürlicher Drehlage bezüglich der Längsachse (11) des Federungszylinders an diesem mittels einer Haltevorrichtung (25, 26) festlegbar ist,
das das Schutzrohr (6) zumindest einen sich in Federungszylinderlängserstreckung an der Außenwand des Schutzrohres (6) erstreckenden Ansatz (12) aufweist und
gekennzeichnet, daß das gemeinsame Gehäuse (10) an seiner Stirnseite (13) eine den Ansatz (12) umgreifende Nut (14) aufweist.

2. Fühlereinrichtung nach Anspruch 1, dadurch gekennzeichnet, daß die Fühler (2, 3) stirnseitig einen der Außenwand des Federungszylinders angepaßten Radius aufweisen.

3. Fühlereinrichtung nach Anspruch 1 oder 2, dadurch gekennzeichnet, daß die Fühler (2, 3) innerhalb des gemeinsamen Gehäuses (10) in Federungszylinderlängserstreckung je nach Anforderung im bestimmten Abstand angeordnet sind.

4. Fühlereinrichtung nach einem der Ansprüche 1 bis 3, dadurch gekennzeichnet, daß eine Einstellung der Fühlerposition durch Drehen des Schutzrohres (6) relativ zum Federungszylinder und durch Verschieben des gemeinsamen Gehäuses (10) auf dem Schutzrohr (6) auch im eingebauten Zustand des Federungszylinders möglich ist.

5. Fühlereinrichtung nach einem der Ansprüche 1 bis 4, dadurch gekennzeichnet, daß auf gemeinsamen Gehäuse (10) und dem Schutzrohr (6) Markierungen (15) zur Einstellung der Fühlerposition angebracht sind.

6. Fühlereinrichtung nach einem der Ansprüche 1 bis 5, dadurch gekennzeichnet, daß das gemeinsame Gehäuse (10) eine Klemmvorrichtung (16) zum Festhalten des gemeinsamen Gehäuses (10) an dem Ansatz (12) aufweist.

## Claims

1. A sensor device (1) for a springing cylinder having a protection tube (6) and at least two sensors (2 and 3), namely a first sensor and a second sensor which is arranged at a spacing relative thereto in the longitudinal extent of the protection tube (6), the sensors being arranged in a common housing (10), wherein the common housing (10) has at its end (13) a radius which is adapted to the outside wall of the protection tube (6), wherein the springing cylinder has a first and a second pivotal connecting eye (4, 5) and an inner tube (17) which is connected to one of the pivotal connecting eyes (4) and which is relatively immovable with respect to the protection tube (6), and an outer tube (8) which is guided between the inner tube and the protection tube (6) and which is provided with the other pivotal connecting eye (5), and a chamber which is variable in size upon being acted upon with pressure fluid with the relative displacement of the outer tube and the inner tube (17), and wherein upon detection of an end region (7) of the outer tube (8) the two sensors (2, 3) produce signals for the feed or discharge of pressure fluid into or out of the chamber (9) respectively, characterised in that in regard to the sensor device (2, 3, 6, 10) the common housing (10) can be fixed to the protection tube (6) releasably and displaceably in the longitudinal direction of the protection tube (6), that the protection tube (6) can be fixed to the springing cylinder by means of a holding device (25, 26) in any rotational position with respect to the longitudinal axis (11) of the springing cylinder, that the protection tube (6) has at least one lug (12) which extends in the longitudinal direction of the springing cylinder on the outside wall of the protection tube (6), and the common housing (10) has at its end (13) a groove (14) which embraces the lug (12).

2. A sensor device according to claim 1 characterised in that the sensors (2, 3) have at their ends a radius which is adapted to the outside wall of the springing cylinder.

3. A sensor device according to claim 1 or claim 2 characterised in that the sensors (2, 3) are arranged at given spacings within the common housing (10) in the longitudinal direction of the springing cylinder depending on the respective requirements involved.

4. A sensor device according to one of claims 1 to 3 characterised in that adjustment of the sensor position is possible by rotation of the protection tube (6) relative to the springing cylinder and by displacement of the common housing (10) on the protection tube (6) even in the installed condition of the springing cylinder.

5. A sensor device according to one of claims 1 to 4 characterised in that markings (15) are provided on the common housing (10) and the protection tube (6) for setting the sensor position.

6. A sensor device according to one of claims 1 to 5 characterised in that the common housing (10) has a clamping device (16) for holding the common housing (10) fast on the lug (12).

## Revendications

1. Dispositif à capteurs (1) pour un amortisseur téléscopique de suspension d'automobiles comportant un tube de protection (6) et au moins deux capteurs (2 et 3), à savoir un premier capteur, et, disposé à une certaine distance de celui-ci dans le sens longitudinal du tube protecteur (6), un deuxième capteur, lesquels sont disposés dans un carter commun (10), ledit carter commun (10) présentant sur son côté frontal (13) un rayon ajusté à la paroi extérieure du tube protecteur (6), tandis que l'amortisseur télescopique possède un premier oeil et un deuxième oeil de montage (4, 5) et un tube intérieur (17), qui est immobile par rapport au tube protecteur (6) et relié à l'oeil (4), ainsi qu'un tube extérieur (8), qui passe entre le tube intérieur (17) et le tube protecteur (6), et est muni de l'autre oeil de montage (5), et en outre une chambre à dimension variable en fonction de son remplissage avec un fluide sous pression associé au coulissement réciproque du tube extérieur et du tube intérieur (17), les deux capteurs, lors de la détection d'une zone terminale (7) atteinte par le tube extérieur (8), activant des signaux pour faire admettre dans la chambre (9) ou pour en évacuer, du fluide sous pression,
**caractérisé** en ce que :
- sur le dispositif à capteurs (2, 3, 6, 10), le carter commun (10) est amovible et peut être fixé sur le dispositif de manière à coulisser dans le sens longitudinal du tube protecteur (6),
- ledit tube protecteur (6) peut être immobilisé dans une position de rotation quelconque par rapport à l'axe longitudinal (11) de l'amortisseur, sur celui-ci, au moyen d'un dispositif de maintien (25, 25),
- le tube protecteur (6) présente au moins une pièce rapportée (12) qui s'étend sur la paroi extérieure du tube protecteur (6) dans le sens longitudinal de l'amortisseur télescopique, et
- le carter commun (10) présente sur sa face frontale (13) une rainure (14) entourant la pièce rapportée (12).

2. Dispositif à capteurs selon la revendication 1, **caractérisé** en ce que les capteurs (2, 3) présentent du côté frontal un rayon ajusté à la paroi extérieure de l'amortisseur télescopique.

3. Dispositif à capteurs selon la revendication 1 ou 2, **caractérisé** en ce que les capteurs (2, 3) sont disposés à l'intérieur du carter commun (10) dans le sens longitudinal de l'amortisseur télescopique, à une distance définie en fonction des besoins.

4. Dispositif à capteurs selon l'une des revendications 1 à 3, **caractérisé** en ce qu'il est possible de régler la position des capteurs par la rotation du tube de protection (6) par rapport à l'amortisseur télescopique et par le coulissement du carter commun (10) sur le tube protecteur, même si l'amortisseur télescopique a déjà été monté sur le véhicule automobile.

5. Dispositif à capteurs selon l'une des revendications 1 à 4, **caractérisé** en ce que sur le carter commun (10) et le tube protecteur (6) sont appliqués des marquages (15) permettant le réglage de la position des capteurs.

6. Dispositif à capteurs selon l'une des revendications 1 à 5, **caractérisé** en ce que le carter commun 10 présente un dispositif de serrage (16) pour fixer le carter commun (10) sur la pièce rapportée (12).
